# FASCICULE DE BREVET EUROPEEN

(11) **EP 1 577 530 B1**
(45) Date de publication et mention de la délivrance du brevet: **08.04.2015**
(21) Numéro de dépôt: 05290355.6
(22) Date de dépôt: 17.02.2005
(51) Int. Cl.: F02K 3/10, F02K 3/105, F02K 1/38

(54) **Dispositif et méthode d'allumage d'un système de post-combustion pour turbo-réacteur à double flux**
Verfahren und Vorrichtung zur Zündung eines Nachverbrenner für Zweistromtriebwerk
Device and method for providing ignition to a post-combustor for bypass gas turbine

(30) Priorité: 24.02.2004 FR 0401813
(43) Date de publication de la demande: 21.09.2005
(73) Titulaire: SNECMA, 75015 Paris (FR)
(72) Inventeur: Baboeuf, Sébastien, 77210 Avon (FR); Charpenel, Sabine, 91800 Brunoy (FR); Maingre, Eric, 77930 Brinville (FR); Page, Alain, 91230 Montgeron (FR); Roche, Jacques, 91090 Lisses (FR)
(74) Mandataire: Delumeau, François Guy

(56) Documents cités:
- US-A- 3 528 250
- US-A- 3 750 402
- US-A- 3 974 646
- US-A- 5 117 628

## Description

### Arrière-plan de l'invention

L'invention concerne les dispositifs de post-combustion pour turboréacteurs double flux, et plus particulièrement l'amélioration des performances d'allumage de tels dispositifs.

Les turboréacteurs double flux pour avions militaires sont couramment équipés d'un dispositif de post-combustion. Celui-ci comprend un canal de post-combustion qui reçoit du turboréacteur un flux primaire central "chaud" et un flux secondaire périphérique "froid" et qui est raccordé en sortie à une tuyère. Les flux primaire et secondaire proviennent de la séparation en deux flux du flux total entrant dans le turboréacteur. Le flux primaire traverse le compresseur haute-pression, la chambre de combustion et les turbines haute-pression et basse-pression du turboréacteur, et parvient au dispositif de post-combustion en aval de la turbine basse-pression. Le flux secondaire s'écoule à la périphérie du turboréacteur et est utilisé notamment pour le refroidissement de certains organes. Le dispositif de post-combustion comprend en outre des moyens d'injection de carburant à proximité d'organes accroche-flamme et un organe d'allumage, généralement une bougie, situé dans une zone d'allumage de post-combustion. En régime de post-combustion, du carburant supplémentaire est injecté et est brûlé par de l'oxygène contenu dans les deux flux. Il en résulte une augmentation de poussée.

L'allumage du dispositif de post-combustion doit être possible dans toutes les phases de vol et dans des temps très courts sous la commande du pilote. Or, dans des zones du domaine de vol où la pression génératrice de flux entrant dans le turboréacteur est faible, et où, par conséquent, la pression dans le dispositif de post-combustion est faible, les performances d'allumage peuvent être insuffisantes. Cela n'est pas compatible avec les exigences opérationnelles de l'avion.

Il est connu dans le document US 5 117 628, un procédé d'amélioration de la stabilité d'allumage d'un dispositif de post-combustion pour turboréacteur double flux.

### Objets et résumé de l'invention

Aussi, l'invention a-t-elle pour but de permettre une amélioration des performances d'allumage afin de garantir celui-ci même dans des conditions défavorables, notamment lorsque la pression au niveau de la zone d'allumage de post-combustion est faible.

Selon un aspect de l'invention, ce but est atteint grâce à un procèdé tel que défini par la revendication 1.

Le réchauffement de la zone d'allumage de post-combustion située au niveau d'arrivée du flux secondaire, par apport d'une fraction de flux primaire apporte une solution simple et efficace au problème d'amélioration des performances d'allumage pour les raisons suivantes.

A géométrie donnée, les performances d'allumage sont étroitement liées aux caractéristiques aérodynamiques de l'écoulement dans la zone d'allumage, aux caractéristiques de pulvérisation du carburant injecté dans la zone d'allumage (donc celles du mélange air-vapeur de carburant) et à l'énergie fournie par l'organe d'allumage.

Une voie d'amélioration réside donc dans la modification des caractéristiques aérodynamiques d'écoulement, lesquelles dépendent de la vitesse du flux, de la pression du mélange air-vapeur de carburant et de la température de ce mélange.

Si la dynamique du flux entourant la zone d'allumage diminue, le temps de séjour du mélange carburé augmente, ce qui améliore les performances d'allumage. Toutefois, l'allumage a généralement lieu dans une zone de recirculation turbulente, derrière un organe accroche-flamme. Dans cette zone, où la vitesse de circulation est plus faible que dans le reste de l'écoulement, il est difficile de connaître exactement la dynamique et la turbulence du flux sauf à réaliser des calculs extrêmement complexes et coûteux. En outre, des phénomènes instationnaires peuvent s'y produire. De plus, la séquence d'allumage de post-combustion comprend une ouverture brutale de la tuyère qui s'accompagne d'une variation transitoire des conditions thermodynamiques du turboréacteur affectant l'écoulement derrière l'organe accroche-flamme. Un contrôle efficace de la dynamique locale de la zone d'allumage est donc en pratique particulièrement difficile.

Une augmentation de la pression du mélange carburé a un effet positif sur les performances d'allumage. Toutefois, la pression dans la zone d'allumage dépend directement du compresseur basse pression et ne peut être augmentée au-delà de la limite à respecter pour conserver une marge minimale au pompage du compresseur. En outre, les pressions des flux primaire et secondaire parvenant au dispositif de post-combustion étant sensiblement les mêmes, on ne dispose pas, à côté du flux primaire, d'une source de pression plus élevée.

Une augmentation de la température du mélange carburé a aussi un effet positif sur les performances d'allumage. Mais, contrairement à ce qui est indiqué ci-avant à propos de la pression, on dispose à l'entrée du dispositif de post-combustion de deux sources de température à des valeurs différentes. La zone d'allumage peut être située à un niveau d'arrivée du flux primaire chaud. Mais il est alors nécessaire de refroidir l'organe d'allumage, ce qui nécessite une architecture locale particulière permettant une ventilation de l'organe d'allumage par une fraction du flux secondaire sans perturber les caractéristiques aérodynamiques dans la zone d'allumage. Le procédé selon l'invention, par la disposition de la zone d'allumage au niveau de l'arrivée du flux secondaire et par le réchauffement local de la zone d'allumage par amenée d'une fraction du flux primaire apporte donc les avantages suivants :
- accroissement des performances d'allumage dans toutes les phases de vol par augmentation de la température du mélange carburé,
- maintien de la fonction allumage au niveau du flux secondaire, de sorte qu'il n'est pas nécessaire de prévoir des moyens supplémentaires de refroidissement de l'organe d'allumage, et ce sans affecter sa durée de vie, et
- dans les zones du domaine de vol où la pression est faible, compensation de ce déficit de pression permettant de restaurer des performances d'allumage compatibles avec les exigences opérationnelles du turboréacteur.

Selon un mode de mise en oeuvre du procédé, on injecte une fraction du flux primaire dans la partie amont de la zone d'allumage. Lorsque l'allumage est réalisé dans une zone bordée par un anneau accroche-flamme, la fraction de flux primaire peut être injectée dans la zone d'allumage à travers des orifices formés dans la paroi de l'anneau accroche-flamme.

Selon un autre mode de mise en oeuvre du procédé, la zone d'allumage reçoit dans la partie amont une fraction du flux secondaire, et une fraction du flux primaire est amenée dans partie aval de la zone d'allumage et se mélange avec ladite fraction de flux secondaire dans la zone d'allumage par recirculation. Lorsque l'allumage est réalisé dans une zone bordée par un anneau accroche-flamme circonférentiel à section sensiblement en forme de C, la fraction de flux primaire peut être amenée au voisinage d'un bord de fuite intérieur de l'anneau accroche-flamme.

Selon un autre aspect de l'invention, le but poursuivi par celle-ci est atteint grâce à un dispositif de post-combustion pour turboréacteur double flux tel que défini par la revendication 6.

Dans le cas où les organes accroche-flamme comportent un anneau accroche-flamme dont un segment borde la zone d'allumage, la seconde extrémité du conduit d'amenée est reliée au bord d'attaque dudit segment d'anneau pour communiquer avec une partie amont de la zone d'allumage à travers des orifices formés dans ledit segment d'anneau. En variante, avec un anneau accroche-flamme à section transversale sensiblement en forme de C, la seconde extrémité du conduit d'amenée s'ouvre au voisinage d'un bord de fuite intérieur dudit segment d'anneau, pour amener la fraction de flux secondaire dans une partie aval de la zone d'allumage.

### Brève description des dessins

L'invention sera mieux comprise à la lecture de la description faite ci-après, à titre indicatif mais non limitatif, en référence aux dessins annexés sur lesquels :
- la figure 1 est une vue très schématique partielle en demi-coupe longitudinale de la partie aval d'un turboréacteur équipé d'un dispositif de post-combustion ;
- la figure 2 est une vue de détail partielle à échelle agrandie de la zone d'allumage du dispositif de post-combustion de la figure 1, modifié selon un premier mode de réalisation de l'invention ;
- la figure 3 est une vue schématique en perspective du détail de la figure 2, vu depuis l'amont ;
- la figure 4 est une vue de détail partielle à échelle agrandie de la zone d'allumage du dispositif de post-combustion de la figure 1, modifié selon un deuxième mode de réalisation de l'invention ; et
- la figure 5 est une vue schématique en perspective du détail de la figure 4, vu depuis l'aval.

### Description détaillée de modes de réalisation de l'invention

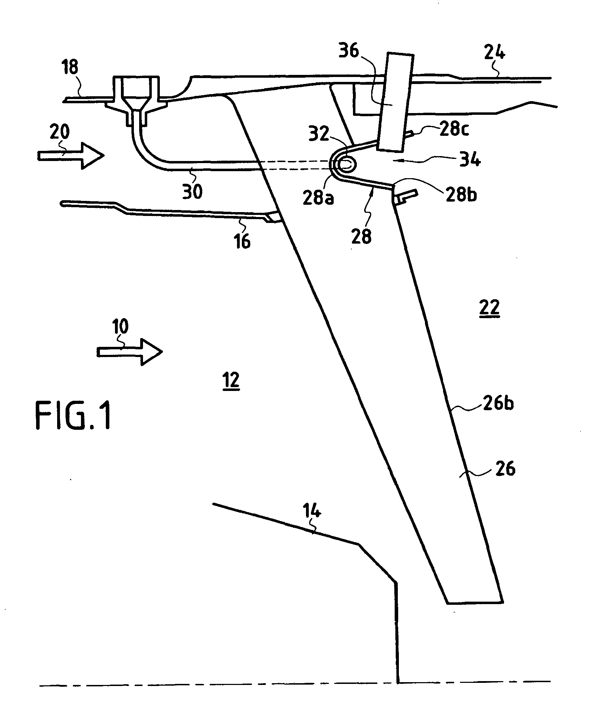

On se référera tout d'abord à la figure 1 qui illustre partiellement la zone d'allumage d'un dispositif de post-combustion d'un turboréacteur double flux.

Comme bien connu en soi, dans un turboréacteur double flux, le flux d'air entrant dans le turboréacteur et comprimé par une soufflante est partagé en un flux primaire axial et un flux secondaire périphérique qui s'écoulent en direction axiale.

Le flux primaire traverse un compresseur haute-pression, alimente la chambre de combustion du turboréacteur et traverse ensuite une turbine haute-pression et une turbine basse-pression.

Le flux secondaire suit un trajet périphérique et est utilisé notamment pour le refroidissement d'organes du turboréacteur.

En aval de la turbine basse-pression (les termes "amont" et "aval" sont utilisés ici en référence à la direction d'écoulement des flux dans le turboréacteur), le flux primaire "chaud" 10 parvient dans une enceinte d'échappement 12 délimitée intérieurement par un cône d'échappement 14 et extérieurement par une paroi de confluence 16.

Le flux secondaire "froid" 20 s'écoule dans un espace situé entre la paroi de confluence 16 et une paroi externe 18.

Le flux primaire 10 et secondaire 20 issus du turboréacteur sont admis et mélangés dans un dispositif de post-combustion comprenant un canal de post-combustion 22 délimité par une paroi externe 24 et raccordé à l'enceinte d'échappement 12.

Le dispositif de post-combustion comprend des organes accroche-flamme formés par des bras radiaux 26 fixés à la paroi externe 18 et par un anneau 28 supporté par les bras 26, au niveau de leurs bords de fuite 26b.

L'anneau accroche-flamme 28 est à section transversale sensiblement en forme de C dont le sommet 28a constitue le bord d'attaque et est prolongé par des ailes intérieure 28b et extérieure 28c.

Une conduite 30 située dans l'écoulement du flux secondaire permet d'alimenter en carburant une rampe circulaire 32 logée à l'intérieur de l'anneau accroche-flamme 28.

L'allumage de la post-combustion est réalisée dans une zone d'allumage 34 qui est bordée par un segment de l'anneau accroche-flamme 28 et où est logé un organe d'allumage ou bougie 36. La bougie 36 a une extrémité qui traverse l'aile extérieure 28c de l'anneau 28 pour produire une étincelle dans la zone d'allumage 34 située dans une zone de recirculation derrière l'anneau 28.

La zone d'allumage 34 est située au niveau de la circulation du flux secondaire 20 parvenant dans le dispositif de post-combustion, l'anneau 28 étant porté par les bras 26 à proximité de leurs extrémités extérieures, de sorte que la bougie 36 est en grande partie balayée par le flux secondaire 20.

Conformément à l'invention, des moyens sont prévus pour amener dans la zone d'allumage du dispositif de post-combustion une fraction du flux primaire "chaud". Cette fraction de flux primaire est prélevée dans l'enceinte d'échappement 12, en amont de son extrémité débouchant dans le canal de post-combustion 22, et est amenée localement et uniquement dans la zone où l'allumage de la post-combustion est réalisé.

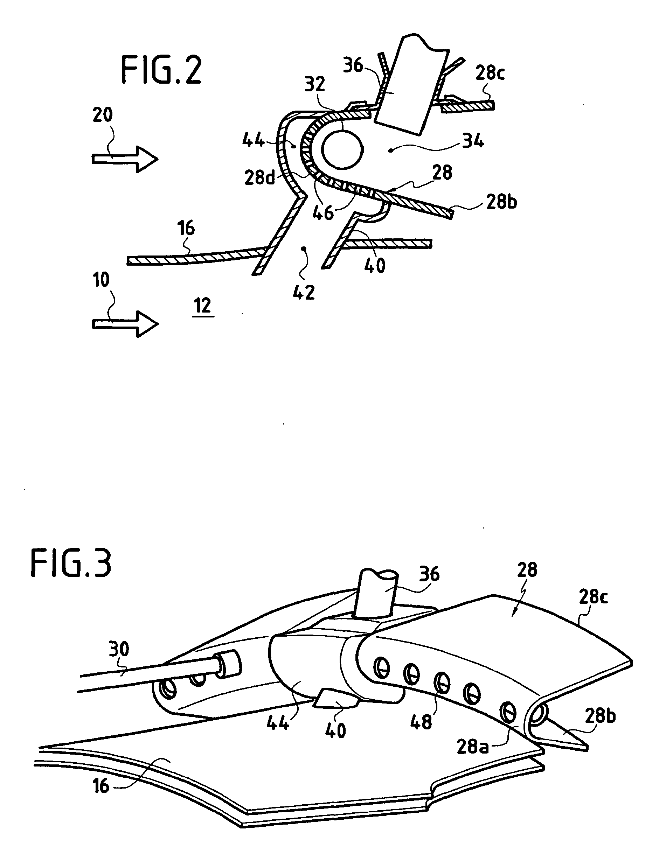

Selon un premier mode de réalisation (figures 2 et 3), un conduit 40 a une première extrémité reliée à l'enceinte d'échappement 12 à travers une ouverture 42 formée dans la paroi de confluence 16 et une deuxième extrémité formant une chambre 44 d'alimentation de la zone d'allumage 34 en flux primaire. A cet effet, le conduit 40 se raccorde à la paroi extérieure de l'anneau accroche-flamme 38, le long du segment 28d de l'anneau 28 qui borde la zone d'allumage. La chambre d'alimentation 44 communique avec l'amont de la zone d'allumage 34 à travers des perforations 46 formées dans la paroi du segment d'anneau 28d.

Une fraction du flux secondaire 20 parvient du côté intérieur de l'anneau accroche-flamme 28 en passant à travers des orifices 48 formés dans le bord d'attaque 28a de l'anneau, hors le segment 28d.

En outre, une fraction du flux secondaire s'écoulant le long des surfaces extérieures des ailes 28b, 28c de l'anneau peut également alimenter l'intérieur de l'anneau 28 par recirculation au niveau des bords de fuite des ailes 28b, 28c. Par les mouvements de recirculation produits à l'intérieur de l'anneau 28, il se produit, dans la zone d'allumage 34, un mélange entre flux primaire "chaud" et flux secondaire "froid". De la sorte, la température dans la zone d'allumage est portée à un niveau intermédiaire entre les températures du flux primaire et du flux secondaire.

En comparaison avec une disposition dans laquelle l'allumage est réalisé dans le seul flux secondaire, l'élévation de température procurée par l'apport de flux primaire permet d'étendre les performances d'allumage.

En comparaison avec une disposition dans laquelle l'allumage est réalisé dans le seul flux primaire, il n'est pas nécessaire de prévoir des moyens spécifiques de refroidissement de l'organe d'allumage 36 pour préserver son intégrité et sa durée de vie.

Le nombre et la dimension des perforations 46 déterminent la quantité de flux primaire 10 injectée dans la zone d'allumage. Cette quantité est choisie avantageusement de manière à porter la température dans la zone d'allumage, avant allumage de la post-combustion, à une valeur qui excède celle du flux secondaire d'au moins 40°C, de préférence au moins 60°C.

On notera que les perforations 46 peuvent être formées dans le bord d'attaque 28a et les parties adjacentes des ailes 28b, 28c du segment 28d de l'anneau 28, ce qui permet d'engendrer une turbulence favorisant le mélange air-carburant dans la zone d'allumage.

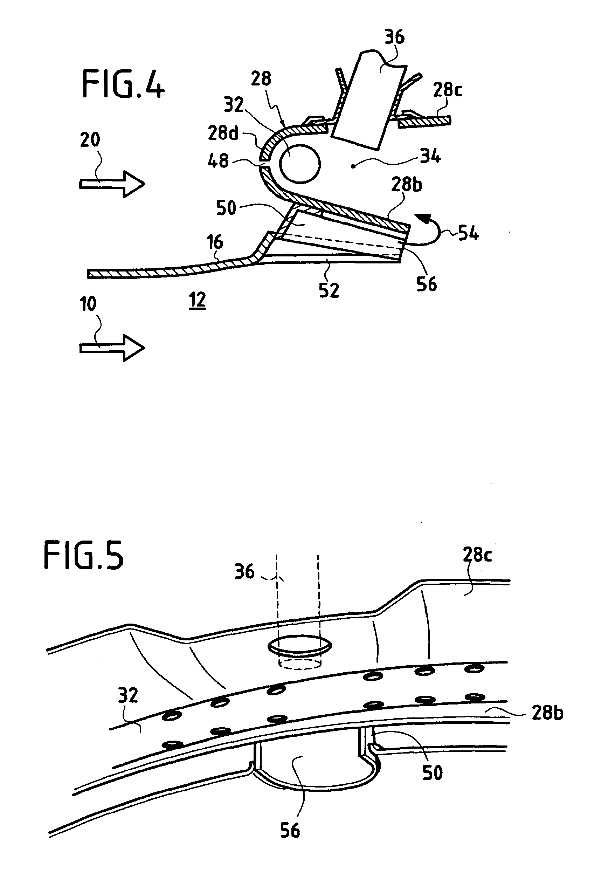

Selon un deuxième mode de réalisation (figures 4 et 5), un conduit 50 a une première extrémité reliée à l'enceinte d'échappement 12 à travers une ouverture 52 formée dans la paroi de confluence 16 et une deuxième extrémité s'ouvrant vers l'aval au niveau de l'aile intérieure 28b de l'anneau accroche-flamme, au niveau du segment 28d de celui-ci.

La fraction d'air primaire prélevée par le conduit 50 parvient dans la partie aval de la zone d'allumage 34 par recirculation au niveau du bord de fuite de l'aile 28b (voir flèche 58 sur la figure 4).

Le sommet 28a de l'anneau accroche-flamme présente des orifices 48 sur toute sa longueur, y compris éventuellement dans le segment 28d bordant la zone d'allumage 34, de sorte que celle-ci est alimentée par une fraction d'air secondaire qui se mélange à l'air primaire amené par le conduit 50.

Comme dans le premier mode de réalisation, la quantité d'air primaire amenée dans la zone d'allumage est choisie pour élever la température de celle-ci à une valeur qui excède celle du flux secondaire d'au moins 40°C, de préférence au moins 60°C.

Les modes de réalisation décrits ci-avant montrent qu'aux avantages déjà mentionnés de l'invention s'ajoutent des faibles coûts d'industrialisation et de fabrication, une grande fiabilité, des coûts de maintenance nuls, et une influence négligeable sur l'aérodynamique générale du dispositif de post-combustion en raison notamment de la simplicité des moyens permettant d'amener une fraction de flux primaire dans la zone d'allumage.

## Revendications

1. Procédé d'amélioration des performances d'allumage d'un dispositif de post-combustion pour turboréacteur double flux, le dispositif de post-combustion recevant un flux primaire "chaud" central (10) issu de la turbine du turboréacteur et un flux secondaire "froid" périphérique (20), et ayant une zone d'allumage (34) de post-combustion, l'allumage étant réalisé dans une zone bordée par un anneau accroche-flamme (28), **caractérisé en ce que** ladite zone d'allumage (34) de post-combustion est située dans le flux secondaire parvenant au dispositif de post-combustion, et **en ce que** l'on prélève une fraction du flux primaire (10) au moyen d'un conduit pour l'amener dans la zone d'allumage (34) de post-combustion dans laquelle un organe d'allumage (36) est situé, afin de porter la température dans cette zone à une valeur supérieure d'au moins 40°C à celle du flux secondaire, de manière à favoriser l'allumage de la post-combustion.

2. Procédé selon la revendication 1, **caractérisé en ce que** l'on injecte une fraction du flux primaire (10) dans la partie amont de la zone d'allumage (34).

3. Procédé selon la revendication 2, **caractérisé en ce que** la fraction de flux primaire (10) est injectée dans la zone d'allumage (34) à travers des orifices (46) formés dans la paroi de l'anneau accroche-flamme.

4. Procédé selon la revendication 1, **caractérisé en ce que** la zone d'allumage (34) reçoit dans la partie amont une fraction du flux secondaire (20), et une fraction du flux primaire (10) est amenée dans partie aval de la zone d'allumage et se mélange avec ladite fraction de flux primaire dans la zone d'allumage par recirculation.

5. Procédé selon la revendication 4, dans lequel l'anneau accroche-flamme est circonférentiel (28) à section sensiblement en forme de C, **caractérisé en ce que** la fraction du flux primaire (10) est amenée au voisinage d'un bord de fuite intérieur de l'anneau accroche-flamme.

6. Dispositif de post-combustion pour turboréacteur double flux comprenant un canal de post-combustion (22) disposé en aval du turboréacteur de manière à recevoir un flux primaire central "chaud" (10) et un flux secondaire périphérique "froid" (20) issus du turboréacteur de part et d'autre d'une paroi de confluence (16), des moyens d'injection (30, 32) de carburant, des organes accroche-flamme (26, 28) comportant un anneau accroche-flamme (28) dont un segment (28d) borde une zone d'allumage (34) de post-combustion (34), **caractérisé en ce que** la zone d'allumage de post-combustion (34) est située au niveau de la circulation du flux secondaire parvenant dans le dispositif de post-combustion, et **en ce qu'**au moins un conduit (40, 50) est prévu pour amener une fraction du flux primaire dans la zone d'allumage, ledit conduit (40, 50) ayant une extrémité reliée à la surface intérieure de la paroi de confluence (16), autour d'une ouverture (42, 52) formée dans cette paroi, afin de recueillir ladite fraction de flux primaire, et une autre extrémité s'ouvrant au niveau de la zone d'allumage de post-combustion (34) dans laquelle un organe d'allumage (36) est situé.

7. Dipositif selon la revendication 6, **caractérisé en ce que** le conduit d'amenée (40) a une extrémité reliée à la surface dudit segment d'anneau (28d) du côté opposé à celui où se trouve la zone d'allumage pour communiquer avec une partie amont de la zone d'allumage à travers des orifices (46) formés dans ledit segment d'anneau.

8. Dispositif selon la revendication 6, dans lequel l'anneau accroche-flamme (28) présente une section transversale sensiblement en forme de C, **caractérisé en ce que** le circuit d'amenée (50) a une extrémité (52) qui s'ouvre au voisinage d'un bord de fuite intérieur dudit segment d'anneau, pour amener la fraction de flux primaire (10) dans une partie aval de la zone d'allumage.

## Patentansprüche

1. Verfahren zur Verbesserung der Zündleistungen einer Nachverbrennungsvorrichtung für ein Zweistrom-Turboluftstrahltriebwerk, wobei die Nachverbrennungsvorrichtung einen aus der Turbine des Turboluftstrahltriebwerks kommenden mittleren "heißen" Primärstrom (10) und einen umfangseitigen "kalten" Sekundärstrom (20) aufnimmt und einen Zündbereich (34) zur Nachverbrennung aufweist, wobei die Zündung in einem durch einen Flammenhalterring (28) gesäumten Bereich vollzogen wird, **dadurch gekennzeichnet, dass** der Zündbereich (34) zur Nachverbrennung in dem zu der Nachverbrennungsvorrichtung gelangenden Sekundärstrom gelegen ist und dass ein Anteil des Primärstroms (10) mittels einer Leitung entnommen wird, um ihn in den Zündbereich (34) zur Nachverbrennung, in dem sich ein Zündorgan (36) befindet, zu führen, um die Temperatur in diesem Bereich auf einen Wert zu bringen, der um wenigstens 40 °C höher als der des Sekundärstroms ist, um die Zündung der Nachverbrennung zu begünstigen.

2. Verfahren nach Anspruch 1, **dadurch gekennzeichnet, dass** ein Anteil des Primärstroms (10) in den stromaufwärtigen Teil des Zündbereichs (34) eingeleitet wird.

3. Verfahren nach Anspruch 2, **dadurch gekennzeichnet, dass** der Anteil des Primärstroms (10) durch Öffnungen (46), die in der Wand des Flammenhalterrings ausgebildet sind, in den Zündbereich (34) eingeleitet wird.

4. Verfahren nach Anspruch 1, **dadurch gekennzeichnet, dass** der Zündbereich (34) in dem stromaufwärtigen Teil einen Anteil des Sekundärstroms (20) aufnimmt und ein Anteil des Primärstroms (10) in den stromabwärtigen Teil des Zündbereichs geführt wird und sich in dem Zündbereich durch Rezirkulation mit dem Anteil des Sekundärstroms mischt.

5. Verfahren nach Anspruch 4, wobei der Flammenhalterring umlaufend (28) mit im Wesentlichen C-förmigem Querschnitt ist, **dadurch gekennzeichnet, dass** der Anteil des Primärstroms (10) in die Nähe einer inneren Austrittskante des Flammenhalterrings geführt wird.

6. Vorrichtung zur Nachverbrennung für ein Zweistrom-Turboluftstrahltriebwerk, umfassend einen Nachverbrennungskanal (22), der dem Turboluftstrahltriebwerk nachgeordnet ist, um einen mittleren "heißen" Primärstrom (10) und einen umfangseitigen "kalten" Sekundärstrom (20), die auf beiden Seiten einer Konfluenzwand (16) aus dem Turboluftstrahltriebwerk gekommen sind, aufzunehmen, Mittel zum Einspritzen (30, 32) von Treibstoff, Flammenhalter-Organe (26, 28), die einen Flammenhalterring (28) umfassen, von dem ein Segment (28d) einen Zündbereich (34) zur Nachverbrennung (34) säumt, **dadurch gekennzeichnet, dass** der Nachverbrennungszündbereich (34) im Bereich der Zirkulation des in die Nachverbrennungsvorrichtung gelangenden Sekundärstroms gelegen ist und dass wenigstens eine Leitung (40, 50) vorgesehen ist, um einen Anteil des Primärstroms in den Zündbereich zu führen, wobei die Leitung (40, 50) ein Ende, das mit der Innenfläche der Konfluenzwand (16) um eine in dieser Wand ausgebildete Öffnung (42, 52) herum verbunden ist, um den Anteil des Primärstroms aufzunehmen, sowie ein weiteres Ende aufweist, das sich in Höhe des Nachverbrennungszündbereichs (34) öffnet, in dem sich ein Zündorgan (36) befindet.

7. Vorrichtung nach Anspruch 6, **dadurch gekennzeichnet, dass** die Zuführleitung (40) ein Ende aufweist, das mit der Oberfläche des Ringsegments (28d) auf der Seite, die derjenigen gegenüberliegt, auf der sich der Zündbereich befindet, verbunden ist, um mit einem stromaufwärtigen Teil des Zündbereichs durch in dem Ringsegment ausgebildete Öffnungen (46) in Verbindung zu stehen.

8. Vorrichtung nach Anspruch 6, wobei der Flammenhalterring (28) einen im Wesentlichen C-förmigen Querschnitt aufweist, **dadurch gekennzeichnet, dass** die Zuführleitung (50) ein Ende (52) aufweist, das sich in der Nähe einer inneren Austrittskante des Ringsegments öffnet, um den Anteil des Primärstroms (10) in einen stromabwärtigen Teil des Zündbereichs zu führen.

## Claims

1. A method of improving the ignition performance of an after-burner device for a bypass turbojet, the after-burner device receiving a "hot" central primary flow (10) coming from the turbine of the turbojet and a "cold" peripheral secondary flow (20), and having an after-burner ignition zone (34), ignition being performed in a zone bordered by a flame catcher ring (28), **characterized in that** said after-burner ignition zone (34) is situated in the secondary flow reaching the after-burner device, and **in that** a fraction of the primary flow (10) is taken by means of a duct in order to bring said fraction into the after-burner ignition zone in which an ignition member (36) is situated, in order to raise the temperature in this zone to a value that is at least 40°C greater than the temperature of the secondary flow, so as to encourage after-burner ignition.

2. A method according to claim 1, **characterized in that** a fraction of primary flow (10) is injected into the upstream portion of the ignition zone (34).

3. A method according to claim 2, **characterized in that** the fraction of primary flow (10) is injected into the ignition zone (34) through orifices (46) formed through the wall of the flame catcher ring.

4. A method according to claim 1, **characterized in that** the ignition zone (34) receives a fraction of secondary flow (20) in its upstream portion, and a fraction of primary flow (10) is brought into the downstream portion of the ignition zone and mixes with said fraction of secondary flow in the ignition zone by backflow.

5. A method according to claim 4, in which the flame-catcher ring is circumferential (28) with a substantially C-shaped section, **characterized in that** the fraction of primary flow (10) is brought into the vicinity of an inner trailing edge of the flame-catcher ring.

6. An after-burner device for a bypass turbojet comprising an after-burner channel (22) disposed downstream from the turbojet in such a manner as to receive a "hot" central primary flow (10) and a "cold" peripheral secondary flow (20) coming from the turbojet on opposite sides of a confluence wall (16), fuel injection means (30, 32), flame catcher members (26, 28) comprising a flame catcher ring (28) having a segment (28d) bording an after-burner (34) combustion zone (34), **characterized in that** the after-burner combustion zone (34) is situated at the level of the circulation of the secondary flow reaching the after-burner device, and **in that** at least one duct (40, 50) is provided to bring a fraction of primary flow into the ignition zone, said duct (40, 50) having one end connected to the inner surface of the confluence wall (16), around an opening (42, 52) formed through said wall, in order to collect said fraction of primary flow, and another end opening at the level of the after-burner combustion zone (34) in which an ignition member (36) is situated.

7. A device according to claim 6, **characterized in that** the feed duct (40) has one end connected to the surface of said ring segment (28d) on its side opposite from that where the ignition zone is located in order to communicate with an upstream portion of the ignition zone through orifices (46) formed in said ring segment.

8. A device according to claim 6, in which the flame-catcher ring (28) has a substantially C-shaped transversal section, **characterized in that** the feed duct (50) has one end (52) opening in the vicinity of an inner trailing edge of said ring segment, in order to bring the fraction of primary flow (10) into a downstream portion of the ignition zone.
